# EUROPÄISCHE PATENTSCHRIFT

(11) **EP 2 273 229 B1**
(45) Veröffentlichungstag und Bekanntmachung des Hinweises auf die Patenterteilung: **23.10.2019**
(21) Anmeldenummer: 10006496.3
(22) Anmeldetag: 22.06.2010
(51) Int. Cl.: G01B 11/00

(54) **Verfahren zur Bestimmung der 3D-Koordinaten eines Objekts**
Method for determining the 3D coordinates of an object
Procédé destiné à la détermination des coordonnées 3D d'un objet

(30) Priorität: 08.07.2009 DE 102009032262
(43) Veröffentlichungstag der Anmeldung: 12.01.2011
(73) Patentinhaber: Carl Zeiss Optotechnik GmbH, 83115 Neubeuern (DE)
(72) Erfinder: Daxauer, Herbert, 6344 Walchsee (AT); Mayer, Thomas, 83059 Kolbermoor (DE); Thamm, Christian, 83022 Rosenheim (DE)
(74) Vertreter: Zinnecker, Armin

(56) Entgegenhaltungen:
- WO-A1-01/88471
- WO-A1-2004/078040
- US-A- 5 805 289
- US-A1- 2002 033 885
- US-A1- 2004 234 122
- US-B1- 6 363 169

## Beschreibung

Die Erfindung betrifft ein Verfahren zur Bestimmung der 3D-Koordinaten eines Objekts.

Die EP 553 266 B1 offenbart ein Verfahren zur Bestimmung der 3D-Koordinaten eines Objekts, die einen Scanner umfasst, durch den das Objekt abtastbar ist. Durch den Scanner werden die 3D-Koordinaten im Scanner-Bezugssystem bestimmt. Ferner ist ein Tracking-System vorhanden, das die Position und Richtung des Scanners bestimmen kann. Von einem Computer können aus den 3D-Koordinaten im Scanner-Bezugssystem und aus den Daten der Position und Richtung des Scanners im absoluten Bezugssystem die 3D-Koordinaten des Objekts im absoluten Bezugssystem bestimmt und aufgezeichnet werden. Der Scanner kann derart gehalten werden, dass er in Bezug auf das Tracking-System und das Objekt unabhängig bewegbar ist.

Aus der US 5,805,289 ist ein Verfahren zur Bestimmung der 3D-Koordinaten eines Objekts bekannt, bei dem Referenzkulissen an einem Objekt befestigt werden. Mit einer Fotogrammmetrie-Methode werden absolute 3D-Koordinaten ermittelt.

Die DE 198 40 334 A1 offenbart eine Vorrichtung zur Verwendung als Navigationskulisse bei der Vermessung von Objekten mit optischer dreidimensionaler Koordinaten-Messtechnik. Die Navigationskulisse enthält ein Bauelement mit Gitterstruktur, auf dem mehrere Messmarken angebracht sind. Auf der dem Bauelement abgewandten Seite der Navigationskulisse ist eine Befestigungsvorrichtung zur Befestigung an dem Objekt angebracht.

Die WO 01/88471 A1 offenbart ein Verfahren zum Bestimmen der 3D-Form eines Objekts, bei dem das Objekt mit einem Referenzkörper verbunden wird, der Referenzobjekte aufweist. Das Objekt und der Referenzkörper werden von einem optoelektronischen Sensor abgetastet, aus dessen Messsignalen die 3D-Koordinaten der Oberflächenpunkte berechnet werden.

Aus der EP 1 724 549 A2 ist ein Verfahren zum Bestimmen der 3D-Koordinaten eines Objekts bekannt, bei dem die 3D-Koordinaten einer Teil-Oberfläche des Objekts durch ein 3D-Meßgerät bestimmt werden, dessen Position durch ein Tracking-System bestimmt wird. Anschließend werden auf diese Weise die 3D-Koordinaten einer teilweise überlappenden, benachbarten Teil-Oberfläche des Objekts bestimmt. Die 3D-Koordinaten des Überlappungsbereichs werden durch ein Matching-Verfahren zusammengesetzt.

Aus der WO 01/88471 A1 ist ein Verfahren nach dem Oberbegriff des Anspruchs 1 bekannt. Die US 6,363,169 B1, die US 2004/234122 A1, die US 2002/033885 A1 und die WO 2004/078040 A1 zeigen ähnliche Verfahren.

Die EP 2 034 269 A1 offenbart ein Verfahren zur dreidimensionalen Digitalisierung von Objekten mit einem 3D-Sensor, der einen Projektor und eine oder mehrere Kameras umfasst. Mit dem Projektor wird ein Muster auf das Objekt projiziert, das von den Kameras erfasst wird.

Aus der US 6 363 169 B1 ist ein Verfahren zur Bestimmung der 3D-Koordinaten eines Objekts bekannt, bei dem das Objekt von Referenzmarken umgeben ist.

Die US 2004/234122 A1 offenbart ein Verfahren zur Bestimmung der 3D-Koordinaten eines Objekts, bei dem das Objekt in verschiedene Positionen gedreht werden kann. Es kann von einem Rahmen mit Referenzmarken umgeben sein.

Aus der US 2002/03385 A1 ist ein Verfahren zum Bestimmen der Form von Blechen bekannt, bei dem Referenzmarken verwendet werden.

Aufgabe der Erfindung ist es, ein verbessertes Verfahren zur Bestimmung der 3D-Koordinaten eines Objekts vorzuschlagen.

Erfindungsgemäß wird diese Aufgabe durch die kennzeichnenden Merkmale des Anspruchs 1 gelöst. Von dem Objekt, das von mehreren Referenzkulissen mit kodierten Referenzmarken umgeben ist, werden mehrere Aufnahmen hergestellt. Diese Aufnahmen werden derart hergestellt, dass darauf jeweils ein Teil des Objekts und ein Teil einer Referenzkulisse enthalten ist. Erfindungsgemäß sind die Referenzkulissen miteinander verkettet.

Das erfindungsgemäße Verfahren kann auf der Grundlage aller bekannten Verfahren zur Bestimmung der 3D-Koordinaten eines Objekts durchgeführt werden. Besonders geeignet sind optische Verfahren. Zur Durchführung dieser optischen Verfahren kann ein optischer 3D-Sensor verwendet werden. Der optische 3D-Sensor kann eine Kamera enthalten, die eine Optik und/oder einen flächenhaften Sensor, insbesondere einen CCD-Sensor, umfassen kann. Ferner kann der 3D-Sensor eine oder mehrere Lichtquellen enthalten.

Vorteilhaft ist es, wenn die Position des 3D-Sensors bestimmt werden kann, insbesondere durch ein Tracking-System. Auf diese Weise ist es möglich, dass der 3D-Sensor die Relativ-3D-Koordinaten des Objekts in dem Bezugssystem des 3D-Sensors bestimmen kann und dass daraus und aus den Absolut-Koordinaten des 3D-Sensors die Absolut-3D-Koordinaten des Objekts bestimmt werden können. Beispiele hierfür sind in der EP 0 553 266 B1, der EP 1 724 549 A2 und der EP 2 034 269 A1 beschrieben, auf die Bezug genommen wird.

Der optische 3D-Sensor kann ein Streifenprojektionssystem umfassen, insbesondere ein Weißlicht-Streifenprojektionssystem. Von einem derartigen 3D-Sensor wird ein Streifenmuster auf das Objekt projiziert. Ferner wird das Objekt aufgenommen. Die Aufnahmen werden ausgewertet. Die Aufnahmen und die Auswertungen können angezeigt und/oder gespeichert werden.

Bei der Bestimmung der 3D-Koordinaten, die auch als 3D-Digitalisierung oder als Vermessung des Objekts bezeichnet werden kann, mit einem Weißlicht-Streifenprojektionssystem und auch mit anderen Systemen ist es notwendig, den 3D-Sensor im Raum in verschiedene Aufnahmepositionen zu bewegen, wenn das zu vermessende Objekt größer ist als das Messfeld des 3D-Sensors. Die einzelnen Aufnahmen des Objekts müssen anschließend zusammengesetzt werden. Hierfür ist es erforderlich, die einzelnen Aufnahmen in einem übergeordneten Koordinatensystem zu registrieren. Das übergeordnete Koordinatensystem ist vorzugsweis ein absolutes Koordinatensystem, beispielsweise das Koordinatensystem des Raumes, in dem sich das Objekt befindet und in dem die Vermessung des Objekts stattfindet. Diese sogenannte globale Registrierung erfordert eine hohe Genauigkeit.

Im Falle der Weißlicht-Streifenprojektion erfolgt die Zusammensetzung der einzelnen Aufnahmen in einem übergeordneten Koordinatensystem typischerweise mit Hilfe der Fotogrammmetrie, wobei Referenzmarken auf dem Objekt angebracht werden müssen oder auf einer Referenzkulisse, die mit dem Objekt verbunden ist. Die Marken müssen separat mit einer Fotogrammetrieausrüstung vermessen werden. Das Verfahren der Fotogrammmetrie bietet eine hohe Genauigkeit, hat aber den Nachteil, dass für die Präparation des Objektes mit Referenzmarken und für deren separate Vermessung ein zusätzlicher Aufwand erforderlich ist. Ferner ist es erforderlich, dem zu vermessenden Objekt angepasste Referenzkulissen herzustellen, auf denen Referenzmarken aufgebracht sind, die fotogrammetrisch vermessen werden müssen. Die an das zu vermessende Objekt angepassten Kulissen müssen möglichst nahe an dem und um das Objekt herum angebracht werden. Diese Kulissen, die auch als Vollkulissen bezeichnet werden können, erlauben zwar die Messung des Objekts mit hoher Genauigkeit, weisen jedoch folgende Nachteile auf:
- die Bauart der Vollkulissen orientiert sich hinsichtlich ihrer Größe und Gestalt an den zu vermessenden Objekten, so dass die Vollkulissen bei großen Messobjekten teuer und unhandlich sind;
- für jedes Messobjekt muss eine eigene Kulisse hergestellt und fotogrammetrisch eingemessen werden, so dass diese Kulissen bei einer Vielzahl unterschiedlicher Messobjekte eine beträchtlichen Kostenfaktor darstellen;
- die Ansprüche an die Stabilität der Vollkulisse sind sehr hoch, sie muss also im Ganzen mechanisch sehr stabil ausgelegt sein, was Gewicht und Kosten erhöht;
- wenn der zu messende Objekttyp wechselt, muss der komplette Messaufbau einschließlich der unhandlichen Vollkulisse umgebaut werden;
- das regelmäßige fotogrammetrische Einmessen einer Vollkulisse zur Sicherstellung und Überwachung von deren Genauigkeit ist größenbedingt und gewichtsbedingt sehr aufwendig.

Diese Nachteile werden durch die Verwendung von mehreren Referenzkulissen, die auch als Referenzkulissenmodule bezeichnet werden können, vermieden. Durch den Einsatz von mehreren Referenzkulissen wird ein deutlich einfacherer, kostengünstigerer und variablerer Messaufbau ermöglicht, der dennoch eine hohe Genauigkeit der Messergebnisse sicherstellt.

Die Referenzkulissen müssen nicht an dem Objekt befestigt sein. Es ist möglich, die Referenzkulissen im Abstand von dem Objekt anzuordnen.

Die Referenzmarken können in sich codiert sein. Es ist allerdings auch möglich, Referenzmarken zu verwenden, die nicht in sich codiert sind, die aber durch ihre relative Anordnung zueinander eine Codierung beinhalten. Bei in sich codierten Referenzmarken genügt es, diese Referenzmarke aufzunehmen. Von Messmarken, die nicht in sich codiert sind, muss eine derart hohe Anzahl in einer Aufnahme enthalten sein, dass aus der relativen Position diese Messmarken zueinander die Codierung decodiert werden kann.

Die Aufnahmen von dem Objekt können sich überlappen. Das Objekt kann abschnittsweise vermessen werden.

Der Teil der Referenzkulisse, der auf der Aufnahme enthalten ist, umfasst vorzugsweise mindestens eine codierte Referenzmarke. Vorzugsweise wird ein solcher Teil einer Referenzkulisse aufgenommen, aus dem die Lage und/oder die Orientierung der Referenzkulisse bestimmt werden kann.

Es ist ferner vorteilhaft, wenn die Referenzkulissen eingemessen sind. Dies erfolgt vorzugsweise dadurch, dass die Lage aller Referenzmarken auf der Referenzkulisse vorab bestimmt wird. Vorzugsweise werden die Daten der Lage aller Referenzmarken, bezogen auf die jeweilige Referenzkulisse, gespeichert.

Vorteilhafte Weiterbildungen sind in den Unteransprüchen beschrieben.

Vorteilhaft ist es, wenn einige oder alle Referenzkulissen länger sind als das Messfeld des 3D-Sensors. Die Referenzkulissen sind also länger als die Größe des bei einer Aufnahme aufgenommenen Bereichs des Objekts. Hierdurch ergeben sich Vorteile bei großen Objekten, also Objekten, für deren Vermessung mehrere Aufnahmen erforderlich sind.

Einige oder alle Referenzkulissen können stabförmig sein.

Vorteilhaft ist es wenn, Aufnahmen, die einen Teil, insbesondere ein Ende einer Referenzkulisse enthalten, einen Teil, insbesondere ein Ende einer weiteren Referenzkulisse enthalten. Dies ist insbesondere dann vorteilhaft, wenn die Referenzkulissen stabförmig sind. Die weitere Referenzkulisse kann der ersten Referenzkulisse benachbart sein. Erfindungsgemäß ist durch die Erfassung von zwei Referenzkulissen möglich, die Referenzkulissen miteinander zu verketten. Hierfür ist es vorteilhaft, wenn von beiden Referenzkulissen jeweils ein Teil aufgenommen wird, der mindestens eine Referenzmarke enthält und/oder ein Teil, aus dem die Lage und/oder Orientierung der jeweiligen Referenzkulisse und/oder deren Referenzmarken bestimmt werden kann.

Die Referenzmarken können selbsttätig decodiert werden. Es ist allerdings auch möglich, die Referenzmarken manuell zu decodieren. Durch die Decodierung können die Referenzmarken einer bestimmten Referenzkulisse zugeordnet werden, die damit identifiziert werden kann.

Einige oder alle Aufnahmen können durch ein 3D-Matching-Verfahren miteinander verknüpft werden, um die Genauigkeit weiter zu steigern.

Vorteilhaft ist es, wenn auch auf den Rückseiten einiger oder aller Referenzkulissen codierte Referenzmarken vorgesehen sind. Dann kann auch die Rückseite des Objekts mit demselben Messaufbau vermessen werden.

Eine weitere vorteilhafte Weiterbildung ist dadurch gekennzeichnet, dass in einem ersten Messdurchlauf die Positionen der Referenzmarken erfasst und gespeichert werden. Der erste Messdurchlauf kann ohne Vermessen des Objekts durchgeführt werden. Es ist allerdings auch möglich, bei diesem ersten Messdurchlauf auch ein Objekt zu vermessen. Die erfassten Positionen der Referenzmarken können in das übergeordnete Koordinatensystem transformiert werden. Die erfassten und/oder transformierten Positionen können gespeichert werden.

Vorteilhaft ist es, wenn weitere Messdurchläufe auf der Grundlage von gespeicherten Positionen der Referenzmarken durchgeführt werden. Dies ist insbesondere dann vorteilhaft, wenn in einem erstem Messdurchlauf die Positionen der Referenzmarken erfasst und gegebenenfalls transformiert und gespeichert werden. Durch die Verwendung der gespeicherten Positionen der Referenzmarken kann Messzeit eingespart werden.

Ein Ausführungsbeispiel der Erfindung wird nachstehend anhand der beigefügten Zeichnung im Einzelnen erläutert. In der Zeichnung zeigt
- Fig. 1: einen Messaufbau mit einem zu vermessenden Objekt und mehreren Referenzkulissen in einer schematischen Ansicht von vorne,
- Fig. 2.: den Messaufbau gemäß Fig. 1 in einer Ansicht von hinten,
- Fig. 3: den Messaufbau gemäß Fig. 1 in einer abgewandelten Dar-stellung und
- Fig. 4: verschiedene Arten von Referenzmarken.

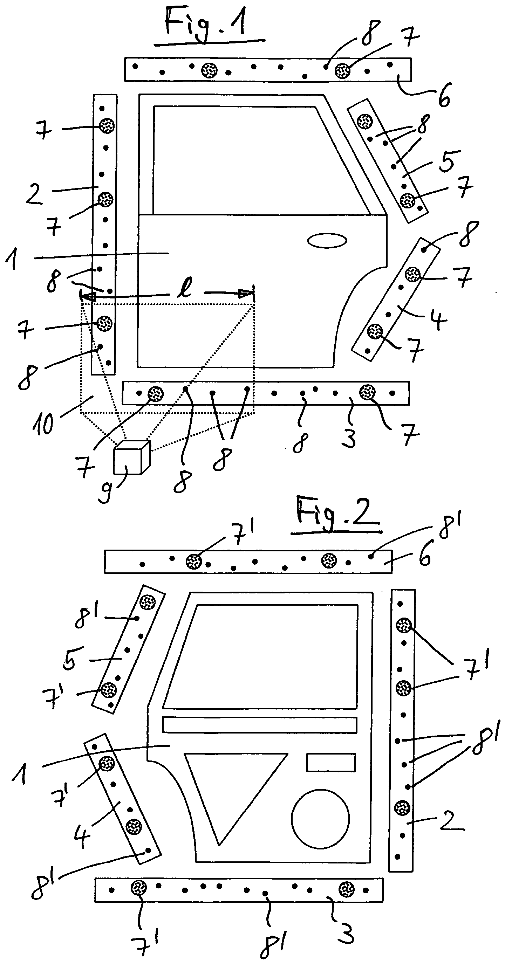

Der in Fig. 1 gezeigte Meßaufbau dient dazu, die 3D-Koordinaten der Vorderseite eines Objekts 1, nämlich einer Kraftfahrzeugtür (Rohbautür), zu bestimmen. Das Objekt 1 ist von fünf Referenzkulissen 2, 3, 4, 5, 6 umgeben. Jede Referenzkulisse 2 - 6 weist Referenzmarken auf, nämlich Referenzmarken 7, die in sich codiert sind, und Referenzmarken 8, die nicht in sich codiert sind, die aber derart räumlich zueinander angeordnet sind, daß diese räumliche Anordnung eine Codierung beinhaltet.

Die Referenzkulissen 2 - 6 sind stabförmig.

Zur Herstellung von Aufnahmen des Objekts ist ein 3D-Sensor 9 vorhanden, der ein Weißlicht-Streifenprojektionssystem und eine Kamera mit einer Optik und einem CCD-Sensor umfaßt. Ferner ist eine Vorrichtung, nämlich ein Tracking-System, vorgesehen, mit der die Lage und Orientierung des 3D-Sensors 9 in einem übergeordneten Koordinatensystem bestimmt werden kann (in der Zeichnung nicht dargestellt). Auf diese Weise können die Absolut-Koordinaten des Objekts 1 und der Referenzkulissen 2 - 6 bestimmt werden.

Die Referenzkulissen 2 - 6 sind vermessen worden. Das Ergebnis dieser Vermessung ist in einem Steuersystem, das einen Computer, insbesondere einen PC, umfassen kann, gespeichert (in der Zeichnung nicht dargestellt). Das Ergebnis der Vermessung der Referenzkulissen 2 - 6 umfaßt eine eindeutige Zuordnung der jeweiligen Referenzmarken 7, 8 zu einer bestimmten Referenzkulisse 2 - 6, die auf diese Weise identifiziert werden kann, und die Lagekoordinaten der jeweiligen Referenzmarken 7, 8 auf der jeweiligen Referenzkulisse 2 - 6.

Die Referenzkulissen 2 - 6 sind nicht an dem Objekt 1 befestigt. Sie werden in der Nähe des Objekts 1 angeordnet, und zwar vorzugsweise in der Weise, daß sie das Objekt 1 umgeben, wie in Fig. 1 gezeigt. Zu diesem Zweck können Referenzobjekte mit verschiedener Länge vorgesehen sein, nämlich Referenzobjekte 2, 3, 6, die länger sind als die Länge l des Meßfeldes des 3D-Sensors, und kurze Referenzkulissen 4, 5, die kürzer sind als diese Länge l. Die Referenzkulissen 2, 3, 6 sind also länger als die Größe I des bei einer Aufnahme aufgenommenen Bereichs des Objekts 2.

Die Referenzkulissen 2 - 6 befinden sich in einer nicht exakt kalibrierten Lage. Sie umgeben das Objekt 1, müssen aber zunächst nicht an exakt vorbestimmten Stellen positioniert werden.

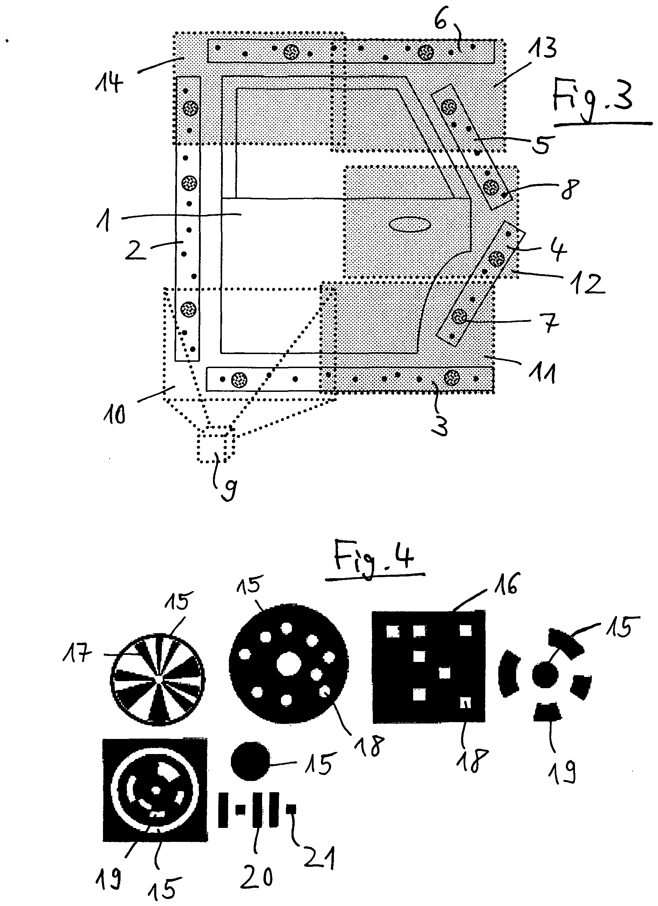

Von dem Objekt 1 werden mehrere Aufnahmen durch den 3D-Sensor 9 hergestellt. Dies ist in Fig. 3 gezeigt, wo die Meßfelder der nacheinander durchgeführten Aufnahmen 10, 11, 12, 13, 14 dargestellt sind. Jede der Aufnahmen 10 - 14 enthält einen Teil des Objekts 1 und einen Teil einer Referenzkulisse 2 - 6. Ferner enthalten alle Aufnahmen 10 - 14 einen Teil einschließlich eines Endes einer ersten Referenzkulisse und einen Teil einschließlich eines Endes einer weiteren Referenzkulisse. Die Aufnahme 10 enthält einen Teil, nämlich ein Ende der Referenzkulisse 2 und einen Teil, nämlich ein Ende, der Referenzkulisse 3. Die Aufnahme 11 enthält Teile bzw. Enden der Referenzkulissen 3 und 4. Die Aufnahme 12 enthält Teile bzw. Enden der Referenzkulissen 4 und 5. Die Aufnahme 13 enthält Teile bzw. Enden der Referenzkulissen 5 und 6. Die Aufnahme 14 enthält Teile bzw. Enden der Referenzkulissen 6 und 2. Es ist alledings auch möglich, daß Aufnahmen lediglich einen Teil von nur einer Referenzkulisse enthalten (in der Zeichnung nicht dargestellt).

Die Aufnahmen überlappen sich teilweise. Die Aufnahmen 10 und 11 überlappen sich, ebenso die Aufnahmen 13 und 14. Die Aufnahme 12 überlappt sich nicht mit weiteren Aufnahmen. Einander überlappende Aufnahmen können miteinander verkettet werden. Wenn sich Aufnahmen nicht überlappen, werden die 3D-Koordinaten der zwischen den Aufnahmen liegenden Bereiche nicht bestimmt. Bei diesen Bereichen kann es sich um nicht interessierende Bereiche handeln.

Jede Aufnahme enthält Referenzmarken 7, 8. Die Zuordnung der Größe der Aufnahmen und der Verteilung der Referenzmarken 7, 8 ist derart, daß bei jeder Aufnahme 10 - 14 von jeder Referenzkulisse 2 - 6 deren Lage und Orientierung bestimmt werden kann. Beispielsweise enthält die Aufnahme 10 eine in sich codierte Referenzmarke 7 und vier nicht in sich codierte Referenzmarken 8, wobei allerdings diese nicht in sich codierten Referenzmarken 8 durch die Lage ihrer Positionen decodiert werden können. In gleicher Weise enthält die Aufnahme 10 eine in sich codierte Referenzmarke 7 und zwei nicht in sich codierte Referenzmarken 8 der Referenzkulisse 2. Entsprechendes gilt für die übrigen Aufnahmen 11 bis 14 und die übrigen Referenzkulissen 4 bis 6.

In einem ersten Meßdurchlauf werden die Positionen der Referenzmarken 7, 8 erfaßt und gespeichert. Während dieses ersten Meßdurchlaufs können auch die 3D-Koordinaten des Objekts 1 bestimmt werden.

Wenn anschließend weitere Objekte vermessen werden sollen, können hierfür die gespeicherten Positionen der Referenzmarken 7, 8 verwendet werden. Es ist also möglich, das Objekt 1 zu entfernen, wobei die Lage der Referenzkulissen 2 - 6 zueinander und damit auch die Lage der Referenzmarken 7, 8 nicht verändert wird. Anschließend wird ein weiteres, ähnliches Meßobjekt in ähnlicher Weise innerhalb der Referenzkulissen 2 - 6 plaziert. Dieses weitere Objekt kann dann vermessen werden. Dieser weitere Meßdurchlauf und noch weitere Meßdurchläufe können auf der Grundlage der gespeicherten Positionen der Referenzmarken 7, 8 durchgeführt werden. Dadurch, daß die gespeicherten Positionen der Referenzmarken 7, 8 verwendet werden, kann die Meßzeit verkürzt werden.

Wie aus Fig. 2 ersichtlich sind auch auf den Rückseiten der Referenzkulissen 2 - 6 codierte Referenzmarken vorgesehen, nämlich in sich codierte Referenzmarken 7' und nicht in sich codierte Referenzmarken 8', die durch ihre räumliche Lage zueinander codiert sind. Auf diese Weise ist es möglich, auch die Rückseite des Objekts 1 mit dem selben Meßaufbau zu vermessen. Insbesondere genügt der beschriebene erstmalige Meßdurchlauf der Vorderseiten der Referenzkulissen 2 - 6 zur vollständigen Erfassung und Speicherung auch der Referenzmarken 7', 8' auf den Rückseiten der Referenzkulissen 2 - 6. Hierfür sind auch die Referenzmarken 7', 8' auf den Rückseiten der Referenzkulissen 2 - 6 vorab vermessen worden, und zwar sowohl hinsichtlich ihrer Positionen zueinander als auch hinsichtlich ihrer Positionen bezüglich der Referenzmarken 7, 8 auf der Vorderseite der jeweiligen Referenzkulisse 2 - 6.

Fig. 4 zeigt verschiedene Ausführungsformen von in sich codierten Referenzmarken 7, 7'. Jede Referenzmarke umfaßt ein unverändertes, nicht codierendes Element und codierende Elemente. Das nicht codierende Element kann aus einem Kreis 15 oder einem Quadrat 16 oder einem Rechteck bestehen. Dieses Element bestimmt die Position der jeweiligen Referenzmarke. Die codierenden Elemente können aus einem zirkulären Strichcode 17, aus einem Punktmuster 18 von runden oder quadratischen Punkten, aus Segmentabschnitten 19 oder aus einem Muster von Punkten 20 und Strichen 21 bestehen. Die codierenden Teile ermöglichen eine Identifikation der jeweiligen Referenzmarke.

Gemäß der Erfindung werden mehrere Referenzkulissen verwendet, die flexibel kombinierbar sind und die vor der Messung um das zu messende Objekt angeordnet werden. Während der Messung des Objekts und möglicherweise weiterer Objekte werden die Referenkulissen dann in ihrer Lage nicht mehr verändert. Mit einem Satz von Referenzkulissen kann eine Vielzahl von unterschiedlichen Meßobjekten gemessen werden.

Auf den Referenzkulissen sind codierte Referenzmarken angebracht. Es kann sich um Fotogrammetriemarken handeln, die in sich codiert sind, und um Fotogrammetriemarken, die nicht in sich, aber durch ihre Lage zueinander codiert sind. Die Referenzmarken auf den Referenzkulissen sind eingemessen, beispielsweise mit Hilfe der Fotogrammetrie. Auf diese Weise liegt für jede Referenzkulisse eine exakte und in sich stabile 3D-Punkteliste vor. Die fotogrammetrische Einmessung jeder einzelnen Referenzkulisse ist nur einmal notwendig. Die einmal eingemessene Punkteliste wird gespeichert.

Das Objekt kann abschnittsweise mit dem 3D-Sensor gemessen werden, wobei in jeder einzelnen Aufnahme des 3D-Sensors sowohl ein Teil des Objekts als auch ein Teil der Referenzmarken auf einer oder mehreren Referenzkulissen erfaßt werden. Die Referenzkulissen sind zumindest teilweise in ihrer Länge so gestaltet, daß sie deutlich größer als das Meßfeld des 3D-Sensors sind, damit mehrere nebeneinanderliegende Aufnahmen des 3D-Sensors über eine Referenzkulisse verknüpft werden können und somit eine hohe Genauigkeit auch bei der Verknüpfung mehrere Meßfelder erreicht wird.

Die Identifikation der einzelnen Referenzkulissen erfolgt selbsttätig (automatish) oder manuell in der Meßszene des 3D-Sensors entweder über die Analyse der geometrischen Anordnung der nicht in sich codierten Referenzmarken oder mit Hilfe der in sich codierten Referenzmarken, was eine einfachere und sicherere Identifikation ermöglicht.

Nach der ersten Messung wird überprüft, welche Referenkulisse oder welche Referenzkulissen neben dem Objekt in der jeweiligen Aufnahme erfaßt wurde bzw. wurden, und zwar durch die Auswertung der in sich codierten Referenzmarken und/oder durch die Auswertung bzw. Analyse der geometrischen Anordnung der nicht in sich codierten Referenzmarken. Anschließend wird die jeweilige 3D-Punkteliste in das Koordinatensystem der ersten Messung transformiert. Jede weitere Messung kann nun in dieses Koordinatensystem transformiert weren, sofern Referenzmarken einer bereits transformierten Referenzkulisse erfaßt werden. Nach jeder Messung wird überprüft, ob weitere, bisher noch nicht erfaßte Referenzmarken und/oder Referenzkulissen gemessen wurden. Gegebenenfalls werden diese dann in die Meßszene transformiert. Zur Genauigkeitssteigerung kann der komplette Verband aller gemessenen Objektabschnitte, also der komplette Verband aller Aufnahmen, zusammen mit den erfaßten Referenzkulissen und/oder Referenzmarken über ein 3D-Matching-Verfahren zueinander ausgeglichen werden.

Durch die Anbringung von Referenzmarken auf allen Seiten der Referenzkulissen, also auch auf deren Rückseite, ist es möglich, die Vorderseite und die Rückseite eines Objekts in einem gemeinsamen Koordinatensystem zu messen.

Nach Abschluß der Messung an dem Objekt und der damit vorliegenden kombinierten und zueinander ausgerichteten Punkteliste aller Referenzkulissen und deren Referenzmarken ist es mögilch, für Wiederholungsmessungen an weiteren Objekten gleichen Tys die komplette Punkteliste der Referenzkulissen und/ Referenzmarken schon beim Start der Meßsequenz komplett einzuladen, und den Transformationsvorgang der einzelnen Referenzkulissen und/oder Referenzmarken bei den Wiederholungsmessungen einzusparen. Dies setzt voraus, daß die Lage der Referenzkulissen für die Wiederholungsmessung nicht geändert worden ist.

## Patentansprüche

1. Verfahren zur Bestimmung der 3D-Koordinaten eines Objekts (1), bei dem das Objekt (1) von mehreren Referenzkulissen (2, 3, 4, 5, 6) mit kodierten Referenzmarken (7, 8) umgeben ist und von dem Objekt (1) mehrere Aufnahmen (10, 11, 12, 13, 14) derart hergestellt werden, daß darauf jeweils ein Teil des Objekts (1) und ein Teil einer Referenzkulisse (2-6) enthalten ist,
**dadurch gekennzeichnet,**
**daß** die Referenzkulissen (2-6) miteinander verkettet werden.

2. Verfahren nach Anspruch 1, **dadurch gekennzeichnet, daß** einige oder alle Referenzkulissen (2, 3, 6) länger sind als das Meßfeld des 3D-Sensors (9).

3. Verfahren nach Anspruch 1 oder 2, **dadurch gekennzeichnet, daß** einige oder alle Referenzkulissen (2-6) stabförmig sind.

4. Verfahren nach einem der vorhergehenden Ansprüche, **dadurch gekennzeichnet, daß** Aufnahmen, die einen Teil, insbesondere ein Ende einer Referenzkulisse (2-6) enthalten, einen Teil, insbesondere ein Ende einer weiteren Referenzkulisse (2-6) enthalten.

5. Verfahren nach einem der vorhergehenden Ansprüche, **dadurch gekennzeichnet, daß** die Referenzmarken (7, 8) selbsttätig dekodiert werden.

6. Verfahren nach einem der vorhergehenden Ansprüche, **dadurch gekennzeichnet, daß** einige oder alle Aufnahmen (10-14) durch ein 3D-Matchingverfahren miteinander verknüpft werden.

7. Verfahren nach einem der vorhergehenden Ansprüche, **dadurch gekennzeichnet, daß** auch auf den Rückseiten einiger oder aller Referenzkulissen (2-6) kodierte Referenzmarken (7', 8') vorgesehen sind.

8. Verfahren nach einem der vorhergehenden Ansprüche, **dadurch gekennzeichnet, daß** in einem ersten Meßdurchlauf die Positionen der Referenzmarken (7, 8) erfaßt und gespeichert werden.

9. Verfahren nach einem der vorhergehenden Ansprüche, **dadurch gekennzeichnet, daß** weitere Meßdurchläufe auf der Grundlage von gespeicherten Positionen der Referenzmarken (7, 8) durchgeführt werden.

## Claims

1. Method for determining the 3-D coordinates of an object (1), in which the object (1) is surrounded by a plurality of reference connecting members (2, 3, 4, 5, 6) with encoded reference marks (7, 8) and in which a plurality of recordings (10, 11, 12, 13, 14) of the object (1) are produced in such a way that each recording contains part of the object (1) and part of a reference connecting member (2-6),
**characterized**
**in that** the reference connecting members (2-6) are linked to one another.

2. Method according to Claim 1, **characterized in that** some or all reference connecting members (2, 3, 6) are longer than the measuring field of the 3-D sensor (9).

3. Method according to Claim 1 or 2, **characterized in that** some or all reference connecting members (2-6) are rod-shaped.

4. Method according to any one of the preceding claims, **characterized in that** recordings which contain a part of a reference connecting member (2-6), in particular an end thereof, contain a part of a further reference connecting member (2-6), in particular an end thereof.

5. Method according to any one of the preceding claims, **characterized in that** the reference marks (7, 8) are decoded automatically.

6. Method according to any one of the preceding claims, **characterized in that** some or all recordings (10-14) are linked to one another by means of a 3-D matching method.

7. Method according to any one of the preceding claims, **characterized in that** encoded reference marks (7', 8') are also provided on the rear sides of some or all reference connecting members (2-6).

8. Method according to any one of the preceding claims, **characterized in that** the positions of the reference marks (7, 8) are captured and stored in a first measurement iteration.

9. Method according to any one of the preceding claims, **characterized in that** further measurement iterations are carried out on the basis of stored positions of the reference marks (7, 8).

## Revendications

1. Procédé destiné à la détermination des coordonnées 3D d'un objet (1), dans lequel l'objet (1) est entouré par plusieurs arrière-plans de référence (2, 3, 4, 5, 6) qui comportent des repères de référence (7, 8) codés et en ce que plusieurs photographies (10, 11, 12, 13, 14) de l'objet (1) sont réalisées de manière à ce que celles-ci contiennent respectivement une partie de l'objet (1) et une partie des arrière-plans de référence (2-6),
**caractérisé en ce que** les arrière-plans de référence (2-6) sont enchaînés les uns aux autres.

2. Procédé selon la revendication 1, **caractérisé en ce que** tout ou partie des arrière-plans de référence (2, 3, 6) sont plus longs que le champ de mesure du capteur 3D (9).

3. Procédé selon la revendication 1 ou 2, **caractérisé en ce que** tout ou partie des arrière-plans de référence (2-6) sont en forme de barre.

4. Procédé selon l'une des revendications précédentes, **caractérisé en ce que** des photographies qui contiennent une partie, notamment une extrémité, d'un arrière-plan de référence (2-6) contiennent une partie, notamment une extrémité, d'un autre arrière-plan de référence (2-6).

5. Procédé selon l'une des revendications précédentes, **caractérisé en ce que** les repères de référence (7, 8) sont décodés automatiquement.

6. Procédé selon l'une des revendications précédentes, **caractérisé en ce que** tout ou partie des photographies (10-14) sont combinées les unes aux autres par un procédé d'appariement 3D.

7. Procédé selon l'une des revendications précédentes, **caractérisé en ce que** des repères de référence (7', 8') codés sont également prévus sur les faces arrière de tout ou partie des arrière-plans de référence (2-6).

8. Procédé selon l'une des revendications précédentes, **caractérisé en ce que** les positions des repères de référence (7, 8) sont détectées et stockées au cours d'un premier cycle de mesure.

9. Procédé selon l'une des revendications précédentes, **caractérisé en ce que** d'autres cycles de mesure sont effectués sur la base de positions stockées des repères de référence (7, 8).
